# EUROPÄISCHE PATENTANMELDUNG

(11) **EP 1 048 196 A2**
(43) Veröffentlichungstag der Anmeldung: **02.11.2000**
(21) Anmeldenummer: 00106373.4
(22) Anmeldetag: 24.03.2000
(51) Int. Cl.: A01C 7/08

(54) **Verteilerkopf für eine pneumatische Sämaschine**

(30) Priorität: 29.04.1999 DE 19919516
(71) Anmelder: Amazonen-Werke H. Dreyer GmbH & Co. KG, 49205 Hasbergen (DE)
(72) Erfinder: Siefken, Claus, 27777 Ganderkesee (DE)

(57) **Zusammenfassung**

Verteilerkopf (1) für eine pneumatische Sämaschine mit einem Deckelelement (2) und einem Unterteil (4) zur Anbringung auf einem Steigrohr (6), dem durch eine Fördereinrichtung Saatgut aus einem Behälter zugeführt wird, um es mittels Druckluft über eine Prallfläche (7) auf Abzweige (9) zu verteilen, an die zu Saatausbringelementen führende Leitungen anschließbar sind, wobei dem Verteilerkopf (1) eine integrierte und Schieber (11) aufweisende Verschließeinrichtung (10) für eine bestimmte Anzahl der Abzweige (9) zugeordnet ist, wobei zumindest die den Abzweigen zugeordneten Rohrleitungen in dem Bereich der Schieber (11) zumindest bis zur Oberkante der Schieber (11) verlängert sind, so daß die Schieber (11) in die in den Rohrleitungsverlängerungen (13) angebrachten Aussparungen zum Absperren der Abzweige (9) seitlich einschiebbar sind.

## Beschreibung

Die Erfindung betrifft einen Verteilerkopf für eine pneumatische Sämaschine gemäß des Oberbegriffes des Patentanspruches 1.

Ein derartiger Verteilerkopf ist beispielsweise in der EP 08 03 177 A2 beschrieben. Dieser Verteilerkopf weist eine in den Verteilerkopf integrierte und Schieber aufweisende Verschließeinrichtung für eine bestimmte Anzahl von Abzweigen auf. Mittels dieser Verschließeinrichtung können zum Anlegen von Fahrgassen einzelne Abzweige verschlossen werden. Diese Schieber sind in Führungselementen verschiebbar angeordnet. Diese Führungselemente befinden sich außerhalb des Verteilerraumes.

Der Erfindung liegt die Aufgabe zugrunde, die Führung für die Schieber in ihrer Absperrposition zu verbessern.

Diese Aufgabe wird dadurch gelöst, daß zumindest die den Abzweigen zugeordneten Rohrleitungen in dem Bereich der Schieber zumindest bis zur Oberkante der Schieber verlängert sind, so daß die Schieber in die in den Rohrleitungsverlängerungen angebrachten Aussparungen zum Absperren der Abzweige seitlich einschiebbar sind. Infolge dieser Maßnahmen bilden die Rohrleitungsverlängerungen mit den Aussparungen die Führung für den Schieber im Absperrbereich der Abzweige zum Verteilerraum hin. Wenn die Schieber in tunnelartigen Führungselementen angeordnet sind, ist vorgesehen, daß die tunnelartigen Führungselemente vom inneren Füllstück bis zum Deckelelement des Verteilerraumes reichen. Die tunnelartigen Führungselemente sind also in den Verteilerraum hinein verlängert. Somit ergibt sich eine gute Führung für die Schieber in ihrer Absperrposition.

In einer bevorzugten Ausführung ist vorgesehen, daß die Führungselemente die Oberkante des Schiebers zum freien Verteilerraum hin überragen, daß in dem in dem Verteilerraum hineinragenden Teil der Führungselemente ein den Verteilerraum mit den Abzweigen verbindender Durchbruch angeordnet ist, so daß diese Teile die Verlängerungen der Rohrleitungen bilden. Hierdurch wird eine einfache Rohrleitungsverlängerung der Abzweige bis über die Oberkante des Schiebers erreicht.

In einer anderen Ausführungsform ist vorgesehen, daß auf dem Unterteil ein mit den Abzweigen zur Deckung gebrachtes, Durchbrüche aufweisendes Element zur Verlängerung der Abzweige oberhalb des Verteilerraumes angeordnet ist, daß dieses Element im Bereich der Schieber Aussparungen aufweist, in welche die Schieber zur Absperrung der Abzweige einschiebbar sind. Infolge dieser Maßnahme wird für alle Rohrleitungen bzw. Abzweige eine Verlängerung oberhalb des Unterteils geschaffen. Hierbei kann das Element als kreisförmige Scheibe oder Ring ausgebildet sein, in welchem die Durchbrüche entsprechend der Abzweige und die Aussparungen für die Schieber und/oder tunnelartigen Führungselement angeordnet sind.

Weitere Einzelheiten der Erfindung sind der Beispielsbeschreibung und den Zeichnungen zu entnehmen. Hierbei zeigen
- Fig.1: den Verteilerkopf im Schnitt und in Prinzipdarstellung,
- Fig.2: den Verteilerkopf in der Ansicht II-II mit abgenommenen oberen Deckelteil in Prinzipdarstellung und in Teilansicht,

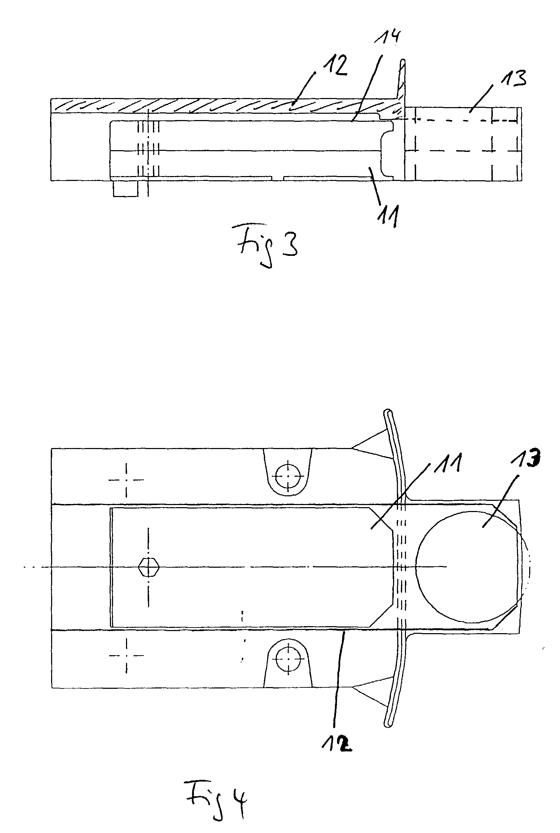

- Fig.3: das tunnelartige Führungselement mit Rohrleitungsverlängerung im Teilschnitt und in Seitenansicht sowie in Prinzipdarstellung,
- Fig.4: das tunnelartige Führungselement mit Rohrleitungsverlängerung in der Ansicht von unten,
- Fig.5: ein weiteres tunnelartiges Führungselement mit Schieber und Rohrleitungs-Verlängerung im Teilschnitt,
- Fig.6: das tunnelartige Führungselement mit Schieber in der Ansicht von unten,
- Fig.7: ein weiterer Verteilerkopf mit Rohrleitungsverlängerung und
- Fig.8: die Rohrleitungsverlängerung in der Ansicht VIII-VIII.

Der Verteilerkopf 1 ist für eine pneumatische Sämaschine vorgesehen. Der Verteilerkopf 1 ist mit einem äußeren Deckelelement 2, einem inneren als Füllstück ausgebildeten Deckelelement 3 und einem Unterteil 4 ausgestattet. Das Unterteil 4 weist ein Verbindungselement 5 zur Anbringung auf dem als Wellrohr ausgebildeten Steigrohr 6 auf. Über eine nicht dargestellte Dosiereinrichtung wird dem Verteilerkopf 1 und dem Steigrohr in Verbindung mit dem Luftstrom in bekannter und daher nicht näher dargestellter Weise Saatgut oder Dünger aus einem Vorratsbehälter zugeführt.

Das Deckelelement 2 ist im oberen Bereich als Prallfläche 7 ausgebildet. Das Unterteil 4 des Verteilerkopfes 1 besteht aus einer Bodenplatte mit Durchbrüchen 8, an die sich die Abzweige 9 anschließen. Die Abzweige 9 sind an der Bodenplatte 4 befestigt. An die Abzweige 9 schließen sich nicht dargestellte Rohrleitungen an, die zu als Säscharen ausgebildeten Ausbringelementen führen.

Das Deckelelement 2 besitzt eine nach unten offene, halbkugelähnliche Form, die im Prallbereich 7 abgeflacht ist. Das Deckelelement 2 ist rotationssymmetrisch und konkav gewölbt ausgebildet, und als plattförmige Halbkugel ausgeformt. Im Inneren des Deckelelementes 2 ist ein weiteres als Füllstück ausgebildetes inneres Deckelelement 3 angeordnet.

Je nach Anzahl der anzuschließenden Säschare und entsprechend der Arbeitsbreite der Sämaschine und des Scharabstandes, sind an dem Verteilerkopf 1 die erforderliche Anzahl von Abzweige 9 angebracht.

Dem Verteilerkopf 1 ist eine integrierte Verschließeinrichtung 10 für das Verschließen einer bestimmten Anzahl der Abzweige 9 zugeordnet. Diese Verschließeinrichtung 10 ist als sogenannte Fahrgassenschaltung ausgebildet und weist eine entsprechend der gewünschten Anzahl der abzuschaltenden Säschare entsprechende Anzahl von als Schieber 11 ausgebildete Verschlußelemente auf. Die Schieber 11 sind in tunnelartigen Führungselementen 12 angeordnet, die sich über die Außenkante des inneren Deckelelementes 3 hinaus bis zur Innenkante des äußeren Deckelelementes 2 in den Verteilerraum hineinerstrecken. In diesen tunnelartigen Führungselementen 12 sind die die Abzweige 9 nach oben verlängernden Durchbrüche 13 angeordnet, so daß durch die tunnelartigen Führungselemente 12 die Rohrleitungen bzw. die Abzweige 9 bis oberhalb der Kante oder Fläche 14 der in den tunnelartigen Führungselementen 12 angeorndeten Schieber 11 verlängert sind. Die Rohrleitungsverlängerungen 13, die an den tunnelartigen Führungselementen 12 angeordnet sind bzw. deren Bestandteil, weisen Aussparungen 15 auf, in die die Schieber 11 zum Absperren der Abzweige 9 seitlich einschiebbar sind. Die Führungselemente 12 überragen die Oberkante 14 des Schiebers zum freien Verteilerraum. Wie bereits vor ausgeführt, sind in dem in den Verteilerraum hineinragenden Teile der Führungselemente 12 die den Verteilerraum mit den Abzweigen 9 verbindenden Durchbrüche 13 angeordnet, so daß diese Teile die Verlängerungen der Rohrleitungen bilden. Der Querschnitt der Durchbrüche 13 entspricht jeweils zumindest annähernd dem jeweiligen Querschnitt des Abzweiges 9. Es ist möglich, daß der Durchbruch in seinem dem Verteilerraum zugewandten Bereich trichterförmig ausgebildet ist. Dadurch, daß die Führungselemente 12 für den jeweiligen Schieber 11 bis in den Verteilerraum bzw. bis in den Bereich der Abzweige 9 bzw. Rohrleitungen verlängert ist, ergibt sich eine gute Führung der Schieber 11. Durch die lange Führungsstrecke der Schieber 11 durch die bis in über Abzweige 9 reichenden Führungselemente, ist ein Verkanten der Schieber in den Führungen ausgeschlossen.

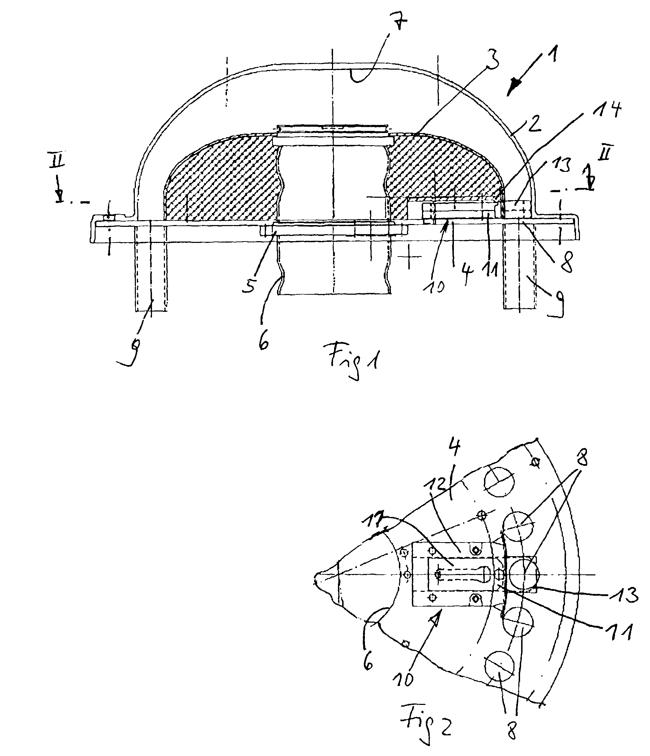

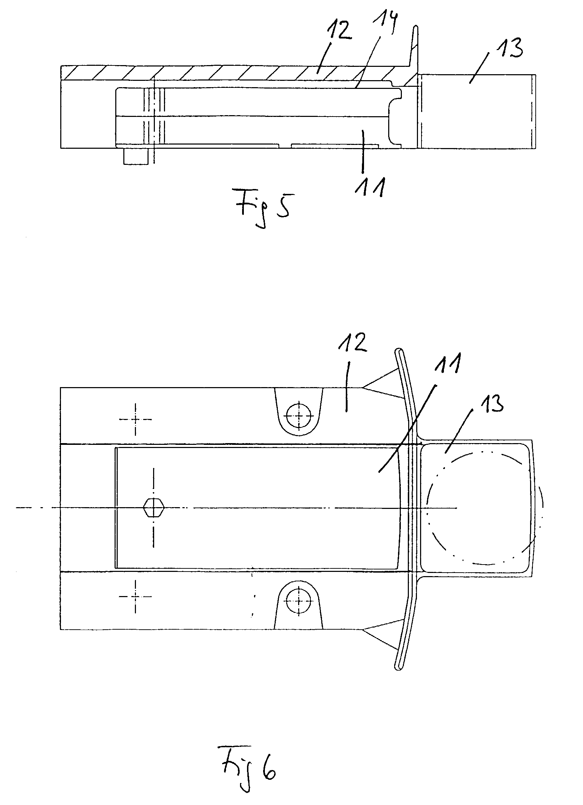

Das Ausführungsbeispiel gemäß den Fig.5 und 6 unterscheidet sich von dem Ausführungsbeispiel gemäß den Fig. 1 und 4 dadurch, daß der jeweilige Durchbruch 13 in dem jeweiligen Führungselement 12 größer als der Querschnitt der Abzweige 9 ausgebildet ist.

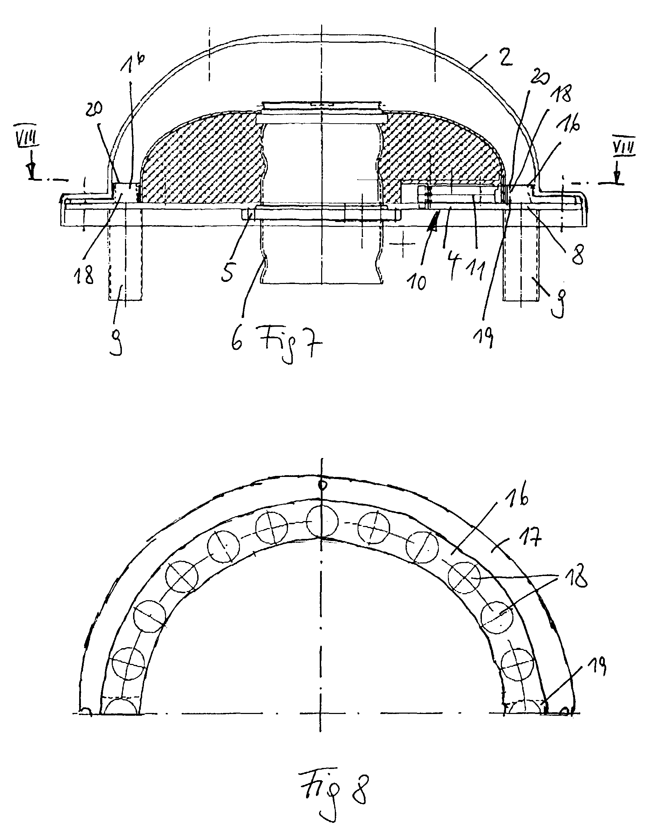

Bei dem Verteilerkopf gemäß Fig.7 ist auf der Bodenplatte, die das Unterteil 4 bildet, eine kreisförmige Scheibe 16 mit einem seitlichen Ringansatz 17, mit dem die Schieber 16 durch das Deckelelement 2 und deren Befestigung fixiert ist, angeordnet. Diese kreisförmige Scheibe 16 weist Durchbrüche 18 auf, die entsprechend des Lochbildes in dem Unterteil 4 angerordnet und ausgebildet sind. In dem Bereich der Schieber 11 sind in dem ringförmigen Element 16 Aussparungen 19 angeordnet, in welche die Schieber 11 zur Absperrung der Abzweige 9 einschiebbar sind. Die Außenflächen der Aussparungen 19 sind als Führungen für die Schieber 11 ausgebildet. Die Höhe des Ringes 16 ist so bemessen, daß sich die Oberkante 20 des Ringes 16 sich oberhalb der Oberfläche der Schieber 11 befindet.

## Patentansprüche

1. Verteilerkopf für eine pneumatische Sämaschine mit einem Deckelelement und einem Unterteil zur Anbringung auf einem Steigrohr, dem durch eine Fördereinrichtung Saatgut aus einem Behälter zugeführt wird, um es mittels Druckluft über eine Prallfläche auf Abzweige zu verteilen, an die zu Saatausbringelementen führende Leitungen anschließbar sind, wobei dem Verteilerkopf (1) eine integrierte und Schieber (11) aufweisende Verschließeinrichtung (10) für eine bestimmte Anzahl der Abzweige (9) zugeordnet ist, dadurch gekennzeichnet, daß zumindest die den Abzweigen (9) zugeordneten Rohrleitungen in dem Bereich der Schieber (11) zumindest bis zur Oberkante (14) der Schieber (11) verlängert sind, so daß die Schieber (11) in die in den Rohrleitungsverlängerungen (13) angebrachten Aussparungen zum Absperren der Abzweige (9) seitlich einschiebbar sind.

2. Verteilerkopf nach Anspruch 1, wobei die Schieber in tunnelartigen Führungselementen angeordnet sind, dadurch gekennzeichnet, daß die tunnelartigen Führungselemente (12) vom inneren Füllstück (3) bis zum Deckelelement (2) des Verteilerraumes reichen.

3. Verteilerkopf nach Anspruch 1, dadurch gekennzeichnet, daß die Führungselemente (12) die Oberkante (14) des Schiebers (11) zum freien Verteilerraum hin überragen, daß in dem in den Verteilerraum hineinragenden Teil der Führungselemente (12) ein den Verteilerraum mit den Abzweigen (9) verbindender Durchbruch (13) angeordnet ist, so daß diese Teile die Verlängerungen der Rohrleitungen bilden.

4. Verteilerkopf nach Anspruch 3, dadurch gekennzeichnet, daß der Durchbruch (13) zumindest annähernd dem Querschnitt des Abzweiges (9) entspricht.

5. Verteilerkopf nach einem oder mehreren der vorstehenden Ansprüche, dadurch gekennzeichnet, daß der Durchbruch in seinem dem Verteilerraum zugewandten Bereich trichterförmig ausgebildet ist.

6. Verteilerkopf nach Anspruch 1, dadurch gekennzeichnet, daß auf dem Unterteil (4) ein mit den Abzweigen (9) zur Deckung gebrachtes, Durchbrüche (18) aufweisendes Element (16) zur Verlängerung der Abzweige (9) oberhalb des Unterteiles (4) angeordnet ist, daß dieses Element (16) im Bereich der Schieber (11) Aussparungen (19) aufweist, in weiche die Schieber (11) zur Absperrung der Abzweige (9) einschiebbar sind.

7. Verteilerkopf nach Anspruch 6, dadurch gekennzeichnet, daß dieses Element (16) als kreisförmige Scheibe oder Ring ausgebildet ist, in welchen die Durchbrüche (18) entsprechend der Abzweige (9) und die Aussparungen (19) für die Schieber (11) und/oder tunnelartigen Führungselemente (12) angeordnet sind.
